# EUROPÄISCHE PATENTSCHRIFT

(11) **EP 2 031 361 B1**
(45) Veröffentlichungstag und Bekanntmachung des Hinweises auf die Patenterteilung: **09.07.2014**
(21) Anmeldenummer: 08162572.5
(22) Anmeldetag: 19.08.2008
(51) Int. Cl.: G01K 3/04, G01K 11/12, G01K 11/30

(54) **Verfahren zur Kennzeichnung und zur Bestimmung der Betriebsdauer eines Bauteils mit einer Wärmedämmschicht**
Method for designating a component having a heat insulation layer and for determining its operating time
Procédé pour caractériser et déterminer la durée de fonctionnement d'un composant

(30) Priorität: 31.08.2007 CH 13632007
(43) Veröffentlichungstag der Anmeldung: 04.03.2009
(73) Patentinhaber: Alstom Technology Ltd, 5400 Baden (CH)
(72) Erfinder: Bossmann, Hans-Peter, 79787, Lauchringen (DE); Eckardt, Dietrich, 5408, Ennetbaden (CH)

(56) Entgegenhaltungen:
- EP-A- 1 426 760
- DE-A1-102005 051 470
- US-A1- 2003 115 941
- US-A1- 2004 082 069
- US-A1- 2004 202 886
- US-A1- 2005 003 097

## Beschreibung

### TECHNISCHES GEBIET

Die Erfindung betrifft ein Verfahren zur Kennzeichnung und zur Bestimmung der Betriebsdauer bei Betriebstemperatur eines mit einer Wärmedämmschicht aus mit Yttriumoxid (Y₂O₃) stabilisiertem Zirkondioxid (ZrO₂) [YSZ] beschichteten Bauteils.

### STAND DER TECHNIK

In stationären Gasturbinen und in Gasturbinen von Flugzeugmotoren werden mit einer Wärmedämmschicht oder TBC (thermal barrier coating) beschichtete Bauteile eingesetzt. Derartige Bauteile werden meist von innen oder von einer Seite gekühlt und sind auf der heissen Seite mit der keramischen TBC-Schicht wärmeisoliert. Eine niedrige Wärmeleitfähigkeit ist bezüglich der erforderlichen Kühlluft und Dicke der TBC-Schicht vorteilhaft. Die keramische TBC-Schicht besteht beispielsweise aus mit Yttriumoxid stabilisiertem Zirkondioxid (YSZ) oder aus anderen keramischen Materialien und Stabilisatoren und kann mit verschiedenen Verfahren, wie z.B. Air Plasma Spray (APS), Electron Beam Physical Vapor Deposition (EB-PVD) usw., mit oder ohne Haftvermittlerschicht auf die Oberfläche von metallischen Substraten appliziert werden.

Bauteile von Gasturbinen sind oft extreme zyklischen Temperaturwechselbeanspruchungen ausgesetzt. Beim Aufheizen und Abkühlen der Bauteile entstehen aufgrund unterschiedlicher thermischen Ausdehnungskoeffizienten der verschiedenen Werkstoffe thermische Spannungen, die zur Schädigung und zum Versagen des Gefüges führen können. Im Betrieb altern die Bauteile abhängig von der Temperaturbelastung des Bauteils und werden nach einer gewissen Betriebsdauer bei Betriebstemperatur rekonditioniert oder verschrottet. Beim Rekonditionieren werden typischerweise die TBC-Beschichtung und eine gegebenenfalls vorhandene Haftvermittlerschicht entfernt. Anschliessend wird das Bauteil nach weiteren Arbeitsschritten, wie Vorbehandlung des Metallsubstrats und Aufbringen einer neuen Haftvermittlerschicht (bond coat), wieder mit einer neuen Wärmedämmschicht beschichtet und eingesetzt.

Die Rekonditionierbarkeit wird durch die Bauteilrandbedingungen, wie z.B. Betriebsdauer bei Hochtemperatur, Hersteller der Beschichtung und Beschichtungsqualität, bestimmt. Da üblicherweise kommerziell verfügbares YSZ (Yttria stabilized Zirconia) unter Anwendung von Standardbeschichtungsverfahren auf die zu beschichtenden Bauteiloberflächen appliziert wird, lassen Bauteile mit erneuerten Wärmedämmschichten im allgemeinen keinen Rückschluss auf den Hersteller der Beschichtung, die relevanten Prozessparameter und die Materialqualität zu. Die Erfahrung zeigt, dass selbst bei gleichem Ausgangsmaterial für die YSZ-Beschichtung erhebliche Unterschiede bezüglich der Lebensdauer von TBCs auftreten. Sind die durch die Beschichtung und den Betrieb des Bauteils vorgegebenen Randbedingungen nicht bekannt, erhöht sich zudem das Risiko einer Fehlbeurteilung des Bauteilzustandes.

Dotierungen von YSZ-Beschichtungen sind an sich bekannt und werden für verschiedene Zwecke eingesetzt, so z.B. eine Infiltration von Cr₂O₃ als Korrosionsschutz, oder Dotierungen mit Sc₂O₃, Yb₂O₃, Nd₂O₃, Sm₂O₃, Gd₂O₃, NiO und Cr₂O₃ zur Reduzierung der Wärmeleitfähigkeit von Wärmedämmschichten.

Aus DE-A-197 33 700 ist eine hartstoffverstärkte stabilisierte ZrO₂-Keramik mit mechanischer Stabilität unter hydrothermaler Beanspruchung bekannt. Die ZrO₂-Keramik enthält neben einer Hartstoffkomponente (z.B. TiC) Al₂O₃ und als Rest eine stabilisierte ZrO₂ -Phase mit einer festen Lösung von Y₂O₃ und CeO₂. Zur Herstellung der ZrO₂-Keramik wird ein Y₂O₃ enthaltendes ZrO₂-Pulver mit einer Cer-Dotierung versehen und dann mit der Hartstoffkomponente und mit Al₂O₃ gemeinsam in einer Flüssigkeit mischgemahlen.

Die US2003/0115941 beschreibt ein Verfahren zur Bestimmung der Betriebsdauer eines mit einer Wärmedammschicht beschichteten Bauteils. Die Wärmedammschicht ist mit Seitenerdmetallionen dotiert. Das Lumineszenzverhalten dieser Dotierung ändert sich bei thermischer Beanspruchung. Somit kann mit einem Lumineszenzvermessungsverfahren die Betriebsdauer bestimmt werden.

### DARSTELLUNG DER ERFINDUNG

Der Erfindung liegt die Aufgabe zugrunde, ein Verfahren der eingangs genannten Art anzugeben, welches eine einfache Identifizierung des Herstellers der Beschichtung ermöglicht und mit dem gleichzeitig die Betriebsdauer der beschichteten Bauteile bei Hochtemperatur zuverlässig bestimmt werden kann. Mit einer Wärmedämmschicht beschichtete Bauteile für Hochtemperaturanwendungen sind insbesondere in stationären Gasturbinen und in Gasturbinen von Flugzeugmotoren eingesetzte Bauteile, wie z.B. Leit- oder Laufschaufeln oder Liner in einer Brennkammer.

Zur erfindungsgemässen Lösung der Aufgabe führt ein Verfahren mit den Merkmalen des Anspruchs 1.

Bei einer bevorzugten Ausführung des erfindungsgemässen Verfahrens wird die YSZ-Keramikschicht zur gleichzeitigen Kennzeichnung des Bauteils und Bestimmung der Betriebsdauer des Bauteils bei Betriebstemperatur mit einer Mischung von entsprechend ausgewählten Metalloxiden dotiert.

Die Wärmedämmschicht kann zum Sichtbarmachen der Kennzeichnung des Bauteils durch Dotierung mit einem geeigneten Metalloxid lokal gefärbt sein. Ein zur Färbung bevorzugtes färbende Metalloxid ist Hämatit (Fe₂O₃) ist. Bei Verwendung von Metalloxiden ohne Eigenfarbe erfolgt das Sichtbarmachen der Kennzeichnung mit technischen Hilfsmitteln, z.B. IR-Licht, UV-Licht oder Röntgenbeugung.

Abhängig von der Höhe der Betriebstemperatur und den zu erwartenden Betriebszeiten kann es vorteilhaft sein, die Änderungen der Gitterparameter des dotierten YSZ entsprechend anzupassen. Die Wärmedämmschicht wird insgesamt, d.h., über die gesamte Bauteiloberfläche, oder an ausgewählten Stellen derart dotiert, dass aufgrund der Betriebsdauer bei Hochtemperatur eine schnellere oder eine langsamere Änderung der Gitterparameter der dotierten YSZ-Kristallphasen im Vergleich zu den undotierten YSZ-Kristallphasen eintritt.

Zur schnelleren Änderung der Gitterparameter des dotierten YSZ im Vergleich zu undotiertem YSZ wird die Wärmedämmschicht bevorzugt mit wenigstens einem Erdalkalimetalloxid, insbesondere mit Magnesiumoxid (MgO) und/oder Kalziumoxid (CaO), dotiert.

Zur langsameren Änderung der Gitterparameter des dotierten YSZ im Vergleich zu undotiertem YSZ wird die Wärmedämmschicht bevorzugt mit wenigstens einem Seltenerdmetalloxid, insbesondere mit Ytterbiumoxid (Yb₂O₃) und/oder Gadoliniumoxid (Gd₂O₃), dotiert.

Zur Charakterisierung des Bauteils kann die Wärmedämmschicht mit wenigstens einem hochtemperaturstabilen Metalloxid, insbesondere mit einem oder mehreren Metalloxiden ausgewählt aus der Gruppe bestehend aus Fe₂O₃, Cr₂O₃, Al₂O₃, NiO und CoO, dotiert werden. Zusätzlich kann die Wärmedämmschicht mit einem hochschmelzenden, oxidationsbeständigen Metall, insbesondere mit Platin (Pt) und/oder Rhenium (Re), dotiert werden.

Die Summe der Konzentrationen aller Dotierungen beträgt bevorzugt 0,0001 bis 5 Gew.-%, insbesondere 0,01 bis 2 Gew.-%.

Die Dotierungen können lokal begrenzt und als Muster, zB. zur Kennzeichnung eines bestimmten Herstellers der Wärmedämmschicht in Form eines Logos, ausgeführt sein.

Die Dotierungen können dem Ausgangsmaterial für die Wärmedämmschicht zugesetzt werden, durch Infiltration erfolgen oder durch eine Umwandlungsreaktion innerhalb der Wärmedämmschicht erzeugt werden.

Die Dotierung mit hochtemperaturstabilen Metalloxiden führt zu keiner Veränderung der Änderung der Gitterparameter gegenüber den undotierten YSZ-Kristallphasen. Die Gitterparameter der mit hochtemperaturstabilen Metalloxiden dotierten YSZ-Kristallphasen sind jedoch charakteristisch für die Betriebsdauer bei Betriebstemperatur des Bauteils, ändern sich jedoch mit dem Mischungsverhältnis der Dotierungen in der YSZ-Kristallphasen in einer für das Bauteil charakteristischen Weise. Da die für die Dotierungen verwendeten hochtemperaturstabilen Metalloxide sich von den in Gasturbinen üblichen Ablagerungen gut unterscheiden lassen, kann mit metallographischen Analyseverfahren, wie z.B. Röntgenbeugung oder Emissionsspektroskopie, das aufgrund der Betriebsdauer bei Betriebstemperatur sich zeitlich ändernde Mischungsverhältnis bestimmt werden, was einen Rückschluss auf die Betriebsdauer des Bauteils bei Betriebstemperatur zulässt.

### KURZE ERLÄUTERUNG DER FIGUREN

Weitere Vorteile Merkmale und Einzelheiten der Erfindung ergeben sich aus der nachfolgenden Beschreibung bevorzugter Ausführungsbeispiele sowie anhand der Zeichnung; diese in
- Fig. 1: einen Querschnitt durch eine Beschichtung eines thermisch bean-spruchten Bauteils;
- Fig. 2: ein Röntgenbeugungsspektrum der Gitterparameter von YSZ nach unterschiedlichen Zeiten bei einer Temperatur von 1300 °C;
- Fig. 3: eine Draufsicht auf die Oberfläche einer YSZ-Beschichtung mit einem dotierten Bereich.

### WEGE ZUR AUSFÜHRUNG DER ERFINDUNG

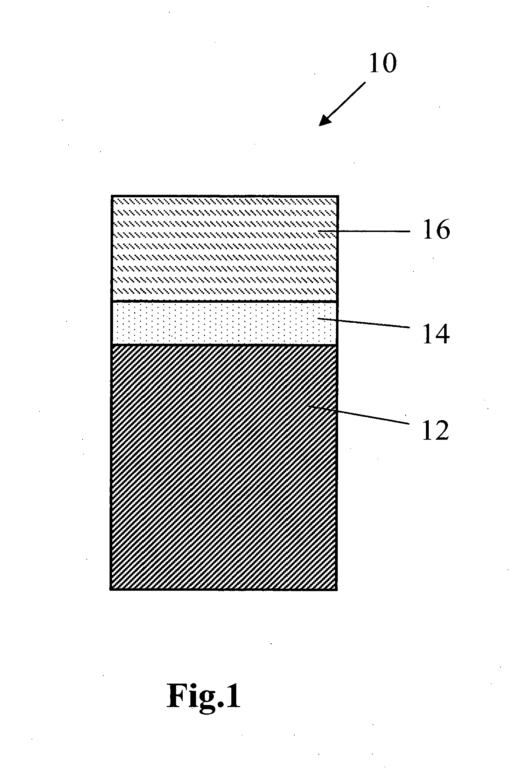

In Fig. 1 ist der Aufbau eines Bauteils 10, z.B. einer Turbinenschaufel, beispielhaft wiedergegeben. Auf einem Substrat 12 aus einer Superlegierung auf Nickelbasis ist eine Haftvermittlerschicht 14 aus einer MCrAIY-Legierung (M = Fe, Co, Ni) aufgebracht. Die Haftvermittlerschicht 14 dient hauptsächlich dem Oxidationsschutz des Substrats 12 sowie der besseren Haftung einer beispielsweise als Wärmedämmschicht 16 durch Plasmaspritzen auf das Substrat 12 aufgetragenen, mit Metalloxiden oder mit einem hochschmelzenden, oxidationsbeständigen Metall dotierten YSZ-Keramikschicht. Alternativ kann auch eine Aluminidschicht als Haftvermittlerschicht verwendet werden. Diese kann durch Aluminiumdiffusion in die Substratoberfläche erzeugt werden.

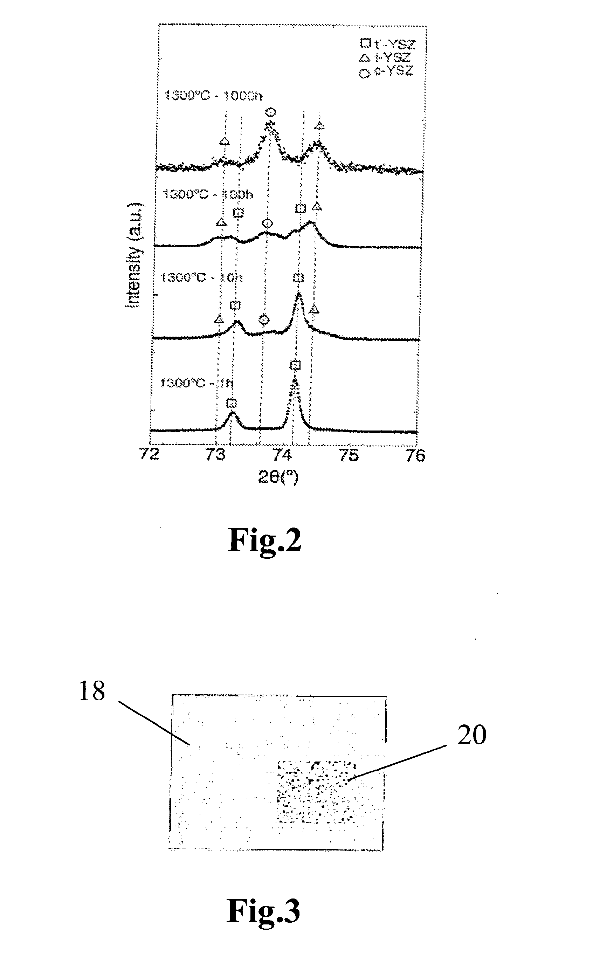

Fig. 2 zeigt ein Röntgenbeugungsspektrum der Gitterparameter der t-, t'- und c-Phasen von YSZ nach verschiedenen Betriebszeiten bei einer Temperatur von 1300 °C. Deutlich erkennbar ist die von der Betriebsdauer bei der Temperatur von 1300 °C abhängige zeitliche Änderung der Gitterparameter. Eine Dotierung von YSZ mit CaO oder MgO führen zu einer schnelleren, eine Dotierung mit Yb₂O₃ oder Gd₂O₃ zu einer langsameren Veränderung der Gitterparameter im Vergleich zu undotiertem YSZ (in der Zeichnung nicht dargestellt).

Fig.3 zeigt eine Oberfläche einer Beschichtung aus undotiertem YSZ als helle Fläche 18 mit einem kleinen Ausschnitt einer dunklen Fläche 20. Die dunkle Fläche 20 entstand durch Dotieren von YSZ durch Infiltration eines Gemisches von CaO, MgAl₂O₄ (Spinell) und Fe₂O₃ (Hämatit). Die dunkle Fläche 20 entspricht einer durch Hämatit hervorgerufenen, bräunlichen Verfärbung.

### BEZUGSZEICHENLISTE

- 10: Bauteil
- 12: Substrat
- 14: Haftvermittlerschicht
- 16: Wärmedämmschicht
- 18: Oberfläche einer YSZ-Beschichtung
- 20: dotierter Ausschnitt aus 18

## Patentansprüche

1. Verfahren zur Kennzeichnung und zur Bestimmung der Betriebsdauer bei Betriebstemperatur eines mit einer Wärmedämmschicht (16) aus mit Yttriumoxid (Y₂O₃) stabilisiertem Zirkondioxid (ZrO₂) [YSZ] beschichteten Bauteils (10),
**dadurch gekennzeichnet, dass**
die Wärmedämmschicht (16) in wenigstens einem Oberflächenbereich des Bauteils (10) zur Markierung mit wenigstens einem Metalloxid dotiert wird, wobei das Metalloxid so ausgewählt wird, dass der dotierte Bereich von YSZ
- zur Kennzeichnung des Bauteils (10) sichtbar ist oder mit optischen Mitteln sichtbar gemacht werden kann, und
- zur Bestimmung der Betriebsdauer des Bauteils (10) bei Betriebstemperatur eine langsamere oder schnellere Änderung der mit einem metallographischen Analyseverfahren bestimmten Gitterparameter der t-, t'-und c-Phasen von dotiertem YSZ im Vergleich zu undotiertem YSZ bewirkt und die Betriebsdauer bei Betriebstemperatur durch Vergleich der Gitterparameter der t-, t'- und c-Phasen des dotierten YSZ mit einer bekannten Kalibrierkennlinie bestimmt wird.

2. Verfahren nach Anspruch 1, **dadurch gekennzeichnet, dass** die Wärmedämmschicht (16) zum Sichtbarmachen der Kennzeichnung des Bauteils (10) durch Dotierung mit einem geeigneten Metalloxid lokal gefärbt wird.

3. Verfahren nach Anspruch 2, **dadurch gekennzeichnet, dass** das färbende Metalloxid Hämatit (Fe₂O₃) ist.

4. Verfahren nach Anspruch 1, **dadurch gekennzeichnet, dass** die Wärmedämmschicht (16) zur schnelleren Änderung der Gitterparameter des dotierten YSZ im Vergleich zu undotiertem YSZ mit wenigstens einem Erdalkalimetalloxid, insbesondere mit Magnesiumoxid (MgO) und/oder Kalziumoxid (CaO), dotiert wird.

5. Verfahren nach Anspruch 1, **dadurch gekennzeichnet, dass** die Wärmedämmschicht (10) zur langsameren Änderung der Gitterparameter des dotierten YSZ im Vergleich zu undotiertem YSZ mit wenigstens einem Seltenerdmetalloxid, insbesondere mit Ytterbiumoxid (Yb₂O₃) und/oder Gadoliniumoxid (Gd₂O₃), dotiert wird.

6. Verfahren nach Anspruch 1, **dadurch gekennzeichnet, dass** die Wärmedämmschicht (10) zur Charakterisierung des Bauteils (10)
mit wenigstens einem hochtemperaturstabilen Metalloxid, insbesondere mit einem oder mehreren Metalloxiden ausgewählt aus der Gruppe bestehend aus Fe₂O₃, Cr₂O₃, Al₂O₃, NiO und CoO, dotiert wird.

7. Verfahren nach Anspruch 6, **dadurch gekennzeichnet, dass** die Wärmedämmschicht (10) zusätzlich mit einem hochschmelzenden, oxidationsbeständigen Metall, insbesondere mit Platin (Pt) und/oder Rhenium (Re), dotiert wird.

8. Verfahren nach einem der Ansprüche 1 bis 7, **dadurch gekennzeichnet, dass** die Summe der Konzentrationen aller Dotierungen 0,0001 bis 5 Gew. -%, insbesondere 0,01 bis 2 Gew. -%, beträgt.

9. Verfahren nach einem der Ansprüche 1 bis 8, **dadurch gekennzeichnet, dass** die Dotierungen lokal begrenzt und als Muster ausgeführt sind.

10. Verfahren nach einem der Ansprüche 1 bis 9, **dadurch gekennzeichnet, dass** die Dotierungen dem Ausgangsmaterial für die Wärmedämmschicht (16) zugesetzt werden.

11. Verfahren nach einem der Ansprüche 1 bis 9, **dadurch gekennzeichnet, dass** die Dotierungen durch Infiltration erfolgen.

12. Verfahren nach einem der Ansprüche 1 bis 9, **dadurch gekennzeichnet, dass** die Dotierungen durch eine Umwandlungsreaktion innerhalb der Wärmedämmschicht (16) erzeugt werden.

## Claims

1. Method for designating a component (10) coated with a heat insulation layer (16) consisting of zirconium dioxide (ZrO₂) stabilized with yttrium oxide (Y₂O₃) [YSZ] and for determining its operating time under operating temperature, **characterized in that** the heat insulation layer (16) is doped, for marking, with at least one metal oxide in at least one surface region of the component (10), the metal oxide being selected such that the doped region of YSZ
- is visible or can be made visible by optical means in order to designate the component (10), and
- to determine the operating time of the component (10) under operating temperature, a slower or faster change in the lattice parameters, determined by means of a metallographic analysis method, of the t-, t'- and c- phases of doped YSZ, as compared with undoped YSZ, is brought about, and the operating time under operating temperature is determined by comparing the lattice parameters of the t-, t'- and c- phases of the doped YSZ with a known calibrating characteristic curve.

2. Method according to Claim 1, **characterized in that** the heat insulation layer (16) is colored locally by doping with a suitable metal oxide in order to make the designation of the component (10) visible.

3. Method according to Claim 2, **characterized in that** the coloring metal oxide is hematite (Fe₂O₃).

4. Method according to Claim 1, **characterized in that** the heat insulation layer (16) is doped with at least one alkaline-earth metal oxide, in particular with magnesium oxide (MgO) and/or calcium oxide (CaO), for a faster change in the lattice parameters of the doped YSZ, as compared with undoped YSZ.

5. Method according to Claim 1, **characterized in that** the heat insulation layer (10) is doped with at least one rare-earth metal oxide, in particular with ytterbium oxide (Yb₂O₃) and/or gadolinium oxide (Gd₂O₃), for a slower change in the lattice parameters of the doped YSZ, as compared with undoped YSZ.

6. Method according to Claim 1, **characterized in that**, to characterize the component (10), the heat insulation layer (10) is doped with at least one metal oxide stable under high temperature, in particular with one or more metal oxides selected from the group consisting of Fe₂O₃, Cr₂O₃, Al₂O₃, NiO and CoO.

7. Method according to Claim 6, **characterized in that** the heat insulation layer (10) is additionally doped with a high-melting oxidation-resistant metal, in particular with platinum (Pt) and/or rhenium (Re).

8. Method according to one of Claims 1 to 7, **characterized in that** the sum of the concentrations of all the dopings is 0.0001 to 5 % by weight, in particular 0.01 to 2 % by weight.

9. Method according to one of Claims 1 to 8, **characterized in that** the dopings are limited locally and are formed as a pattern.

10. Method according to one of Claims 1 to 9, **characterized in that** the dopings are added to the initial material for the heat insulation layer (16).

11. Method according to one of Claims 1 to 9, **characterized in that** the dopings take place by infiltration.

12. Method according to one of Claims 1 to 9, **characterized in that** the dopings are generated by means of a conversion reaction within the heat insulation layer (16).

## Revendications

1. Procédé d'identification et de détermination de la durée de vie à température de fonctionnement d'un composant (10) revêtu d'une couche thermiquement isolante (16) de dioxyde de zirconium (ZrO₂) [YSZ] stabilisée par oxyde d'yttrium (Y₂O₃), **caractérisé en ce que**
la couche thermiquement isolante (16) est dopée avec au moins un oxyde métallique dans au moins une partie de la surface du composant (10) en vue de son marquage, l'oxyde métallique étant sélectionné de telle sorte que
pour pouvoir identifier le composant (10), la partie dopée de l'YSZ soit visible ou puisse être rendue visible en recourant à des moyens optiques et que
pour déterminer la durée de vie du composant (10) à sa température de fonctionnement, la modification des paramètres de réseau des phases t, t' et c de l'YSZ dopé, déterminés par une opération d'analyse métallographique soit plus lente ou plus rapide que celle d'un YSZ non dopé et que la durée de vie à température de fonctionnement soit déterminée par comparaison des paramètres de réseau des phases t, t' et c de l'YSZ dopé avec une ligne caractéristique d'étalonnage connue.

2. Procédé selon la revendication 1, **caractérisé en ce que** la couche thermiquement isolante (16) est colorée localement par dopage à l'aide d'un oxyde métallique approprié pour rendre visible l'identification du composant (10).

3. Procédé selon la revendication 2, **caractérisé en ce que** l'oxyde métallique colorant est l'hématite (Fe₂O₃).

4. Procédé selon la revendication 1, **caractérisé en ce que** pour obtenir une modification des paramètres de réseau plus rapide pour l'YSZ dopé que pour l'YSZ non dopé, la couche thermiquement isolante (16) est dopée à l'aide d'au moins un oxyde de métal alcalino-terreux, en particulier à l'aide d'oxyde de magnésium (MgO) et/ou d'oxyde de calcium (CaO).

5. Procédé selon la revendication 1, **caractérisé en ce que** pour obtenir une modification des paramètres de réseau plus lente pour l'YSZ dopé que pour l'YSZ non dopé, la couche thermiquement isolante (10) est dopée à l'aide d'au moins un oxyde de terre rare, en particulier à l'aide d'oxyde d'ytterbium (Yb₂O₃) et/ou d'oxyde de gadolinium (Gd₂O₃).

6. Procédé selon la revendication 1, **caractérisé en ce que** pour identifier le composant (10), la couche thermiquement isolante (10) est dopée à l'aide d'au moins un oxyde métallique stable à haute température et en particulier à l'aide d'un ou de plusieurs oxyde métalliques sélectionnés parmi Fe₂O₃, Cr₂O₃, Al₂O₃, NiO et CoO.

7. Procédé selon la revendication 6, **caractérisé en ce que** la couche thermiquement isolante (10) est de plus dopée à l'aide d'un métal à haut point de fusion et résistant à l'oxydation et en particulier à l'aide de platine (Pt) et/ou de rhénium (Re).

8. Procédé selon l'une des revendications 1 à 7, **caractérisé en ce que** la somme des concentrations de tous les éléments dopants vaut de 0,0001 à 5 % en poids et en particulier de 0,01 à 2 % en poids.

9. Procédé selon l'une des revendications 1 à 8, **caractérisé en ce que** les dopages sont limités localement et réalisés en suivant un motif.

10. Procédé selon l'une des revendications 1 à 9, **caractérisé en ce que** les éléments dopants sont ajoutés au matériau de départ de la couche thermiquement isolante (16).

11. Procédé selon l'une des revendications 1 à 9, **caractérisé en ce que** les dopages sont réalisés par imprégnation.

12. Procédé selon l'une des revendications 1 à 9, **caractérisé en ce que** les dopages sont formés par une réaction de conversion à l'intérieur de la couche thermiquement isolante (16).
